# EUROPÄISCHE PATENTSCHRIFT

(11) **EP 3 244 035 B1**
(45) Veröffentlichungstag und Bekanntmachung des Hinweises auf die Patenterteilung: **08.05.2019**
(21) Anmeldenummer: 17162834.0
(22) Anmeldetag: 24.03.2017
(51) Int. Cl.: F02B 37/00, F02C 6/12, F02M 26/09, F02M 26/06, F02M 26/19

(54) **VERDICHTER, ABGASTURBOLADER UND BRENNKRAFTMASCHINE**
COMPRESSOR, EXHAUST GAS TURBOCHARGER AND COMBUSTION ENGINE
COMPRESSEUR, TURBOCOMPRESSEUR ET MOTEUR À COMBUSTION INTERNE

(30) Priorität: 09.05.2016 DE 102016207948
(43) Veröffentlichungstag der Anmeldung: 15.11.2017
(73) Patentinhaber: VOLKSWAGEN AKTIENGESELLSCHAFT, 38440 Wolfsburg (DE)
(72) Erfinder: Koehler, Ingo, 38104 Braunschweig (DE); Abad Lozano, Maria-Teresa, 38100 Braunschweig (DE); Bartolome, Javier, 38102 Braunschweig (DE); Jeschke, Jan, 38539 Müden (DE); Köhler, Stefan, 38162 Cremlingen (DE)

(56) Entgegenhaltungen:
- EP-A1- 2 987 983
- EP-A2- 1 789 683
- WO-A1-2015/093176
- WO-A2-2012/030776
- DE-A1-102014 216 162
- DE-U1-202014 102 769
- GB-A- 2 526 594

## Beschreibung

Die Erfindung betrifft einen Verdichter, einen einen Verdichter umfassenden Abgasturbolader und eine einen Verdichter umfassende Brennkraftmaschine.

In einem Verdichter einer Brennkraftmaschine wird das über einen Frischgasstrang einem Verbrennungsmotor der Brennkraftmaschine zugeführte Frischgas verdichtet.

Bei heutigen Brennkraftmaschinen wird häufig eine Niederdruck-Abgasrückführung (ND-AGR) eingesetzt, um Emissionsgrenzwerte zu erreichen. Dabei wird stromab einer Turbine eines Abgasturboladers aus einem Abgasstrang entnommenes Abgas vor dem Verdichter des Abgasturboladers in den Frischgasstrang der Brennkraftmaschine eingeleitet, von dem Verdichter zusammen mit dem Frischgas angesaugt und in die Brennräume des Verbrennungsmotors rückgeführt. Dabei sollte die Einleitung des rückgeführten Abgases möglichst nahe vor dem Verdichter erfolgen, um eine nicht gewünschte Kondensatbildung im Frischgas zu vermeiden oder gering zu halten. Für die Regelung der ND-AGR-Rate wird in die ND-AGR-Einleitung vor dem Verdichtereintritt in der Regel ein Regelventil integriert.

Aus der DE 10 2011 117 360 A1 ist ein Gaszuführungssystem bekannt, bei dem es sich um einen Abschnitt eines Frischgasstrangs einer Brennkraftmaschine handeln kann, wobei dieser Abschnitt des Frischgasstrangs stromauf eines Verdichters angeordnet sein kann. Das Gaszuführungssystem soll dazu dienen können, über ein Abgasrückführsystem rückgeführtes Abgas in einen über den Frischgasstrang geführten Luftstrom einzuleiten. Hierzu umfasst das Gaszuführungssystem einen Rohrabschnitt zur Führung des Luftstroms sowie einen schneckenförmig um diesen Rohrabschnitt geführten Kanal für das rückzuführende Abgas, der über einen Ringspalt mit im Wesentlichen axialer Ausrichtung in den Rohrabschnitt mündet.

Weiterhin ist aus der DE 10 2012 013 595 A1 ein Verdichter für eine Brennkraftmaschine bekannt, dessen Gehäuse einen sogenannten Rezirkulationskanal ausbildet, der als sogenannte kennfeldstabilisierende Maßnahme dienen soll. In den Rezirkulationskanal kann ein Kanal einer Abgasrückführung münden.

Die DE 10 2004 040 893 A1 beschreibt einen Verdichter eines Abgasturboladers für eine Brennkraftmaschine, bei der in das Gehäuse des Verdichters ein AGR-Kanal integriert ist, der spiralförmig in einen Verdichterraum übergeht. Dadurch soll eine durch eine sogenannte Vordrallerzeugung bewirkte Erhöhung der Turboladerdrehzahl im Teillastbereich realisiert werden können.

Die GB 2 526 594 A, die DE 10 2014 216 162 A1, die WO 2015/093176 A1 und die WO 2012/030776 A2 offenbaren Verdichter, bei denen jeweils das rückzuführende Abgas zunächst in einen einen Einlasskanal des jeweiligen Verdichters umgebenden Ringkanal und von diesem über eine Vielzahl von AGR-Kanalmündungen, die in gleichmäßiger Teilung über dem Umfang des Einlasskanals verteilt angeordnet sind, in den Einlasskanal eingebracht wird.

Die EP 2 987 983 A1 beschreibt einen Verdichter, bei dem rückzuführendes Abgas über einen einen Einlasskanal des Verdichters umgebenden Ringkanal sowie über eine an einem längsaxialen Ende dieses Ringkanals angeordnete, ringförmig geschlossen umlaufende Kanalmündung eingebracht wird.

Ausgehend von diesem Stand der Technik lag der Erfindung die Aufgabe zugrunde, eine vorteilhafte Möglichkeit der Einleitung rückzuführenden Abgases stromauf eines Verdichters in einen mittels des Verdichters zu verdichtenden Gasstrom anzugeben.

Diese Aufgabe wird mittels eines Verdichters gemäß dem Patentanspruch 1 gelöst. Ein Abgasturbolader mit einem solchen Verdichter sowie eine Brennkraftmaschine mit einem solchen Verdichter sind Gegenstände der Patentansprüche 5 und 6. Vorteilhafte Ausgestaltungen des erfindungsgemäßen Verdichters und damit des erfindungsgemäßen Abgasturboladers und/oder der erfindungsgemäßen Brennkraftmaschine sind Gegenstände der weiteren Patentansprüche und/oder ergeben sich aus der nachfolgenden Beschreibung der Erfindung.

Ein Verdichter, bei dem es sich insbesondere um einen Radialverdichter handeln kann und der ein (ein- oder mehrteiliges) Gehäuse umfasst, das einen Strömungsraum, innerhalb dessen ein Verdichterlaufrad drehbar gelagert ist, und einen Einlasskanal, der sich zwischen einem Verdichtereinlass und dem Strömungsraum erstreckt, ausbildet, wobei in den Einlasskanal ein AGR-Kanal für eine Abgasrückführung mündet, ist einerseits dadurch gekennzeichnet, dass der AGR-Kanal in einem umfangsseitig geschlossen ausgebildeten AGR-Kanalabschnitt bogenförmig um zumindest einen Abschnitt des Umfangs des Einlasskanals herum verläuft, so dass ein AGR-Kanalabschnittseinlass (d.h. der Einlass des AGR-Kanalabschnitts) in Umfangsrichtung des Einlasskanals zu der (insbesondere einer einzigen) AGR-Kanalmündung versetzt angeordnet ist. Auf diese Weise kann ein Drall der Strömung des rückzuführenden Abgases (um eine Längsachse des Einlasskanals) realisiert werden, wodurch ein im Wesentlichen tangentiales Einströmen des rückgeführten Abgases in die über den Einlasskanal geführte Gasströmung realisiert werden kann, was zu einer vorteilhaften, insbesondere strömungstechnisch vorteilhaften Vermischung des rückgeführten Abgases mit der Gasströmung führen kann.

Die versetzte Anordnung des AGR-Kanalabschnittseinlasses und AGR-Kanalmündung bezieht sich zumindest auf deren Kanalmitten, vorzugsweise jedoch auf jeweils den AGR-Kanalabschnittseinlass und die AGR-Kanalmündung insgesamt.

Weiterhin ist vorgesehen dass der AGR-Kanalabschnitt (mindestens) zwei Teilkanäle umfasst, wobei diese zwei Teilkanäle ausgehend von dem AGR-Kanalabschnittseinlass in entgegengesetzten Umfangsrichtungen bogenförmig um zumindest einen Abschnitt des Umfangs des Einlasskanals herum verlaufen. Dies kann insbesondere aus Gründen der räumlichen Integration des AGR-Kanals sinnvoll sein, wenn relativ große AGR-Raten für eine einen solchen Verdichter aufweisende Brennkraftmaschine realisiert werden sollen.

Eine Erzeugung eines Dralls in der für das Verdichterlaufrad vorgesehenen Drehrichtung wird dabei in vorteilhafter Weise dadurch erreicht, dass der kleinste Strömungsquerschnitt desjenigen Teilkanals, dessen Krümmungsrichtung der für das Verdichterlaufrad vorgesehenen Drehrichtung entspricht, größer als der kleinste Strömungsquerschnitt des anderen Teilkanals ist. Auf diese Weise kann erreicht werden, dass über den AGR-Kanal rückzuführendes Abgas selbsttätig zu einem größeren Anteil über den "größeren" Teilkanal, dessen Krümmungsrichtung der für das Verdichterlaufrad vorgesehenen Drehrichtung entspricht, strömt, wodurch sichergestellt werden kann, dass das insgesamt in den Einlasskanal einströmende Abgas, das über beide Teilkanäle zugeführt wurde, die gewünschte Drallrichtung aufweist.

Vorzugsweise kann vorgesehen sein, dass sich die AGR-Kanalmündung über maximal die Hälfte, maximal ein Drittel oder maximal ein Viertel des Umfangs des Einlasskanals erstreckt, wodurch das über den AGR-Kanal rückzuführende Abgas durch einen relativ kleinen Öffnungsquerschnitt in den Einlasskanal überströmen muss. Dies kann zu relativ hohen Strömungsgeschwindigkeiten für das rückzuführende Abgas führen, die sich vorteilhaft auf die Vermischung mit der über den Einlasskanal geführten Gasströmung auswirken können. Weiterhin bevorzugt kann noch vorgesehen sein, dass der AGR-Kanal derart ausgebildet ist, dass über diesen in den Einlasskanal eintretendes Abgas einen Drall mit einer der für das Verdichterlaufrad vorgesehenen Drehrichtung entsprechenden Drallrichtung aufweist. Dieser Drall des eintretenden Abgases kann auch einen entsprechenden Drall in der über den Einlasskanal zu dem Verdichterlaufrad geführten Gasströmung bewirken oder verstärken, was sich in positiver Weise auf das Betriebsverhalten des Verdichters auswirken kann.

Um die erfindungsgemäß angestrebte Wirkung des spezifischen Einströmens von über den AGR-Kanal rückgeführtem Abgas in den Einlasskanal möglichst vorteilhaft ausnutzen zu können, sollte der AGR-Kanalabschnitt, der bogenförmig um den Einlasskanal herum geführt ist, relativ lang sein. Dazu kann vorgesehen sein, dass der AGR-Kanalabschnitt um mindestens 90°, mindestens 120° oder mindestens 150° des Umfangs des Einlasskanals herum verläuft.

Insbesondere aus Gründen einer möglichst kompakten Bauform für den Verdichter beziehungsweise aus Gründen einer hinsichtlich des erforderlichen Bauraums möglichst effizienten Integration eines Verdichters in eine Brennkraftmaschine beziehungsweise in einen die Brennkraftmaschine aufnehmenden Motorraum kann vorgesehen sein, dass der Einlasskanal einen gekrümmten Verlauf aufweist. Dabei kann sich der gekrümmte Verlauf insbesondere auch bis zu der Eintrittsebene des Verdichterlaufrads erstrecken. Bei einem solchen Verdichter sollte vorzugsweise vorgesehen sein, dass eine Mündung eines AGR-Kanals auf der Krümmungsinnenseite des gekrümmten Verlauf des Einlasskanals angeordnet ist, weil dadurch eine Sogwirkung der in dem Einlasskanal umgelenken Gasströmung ausgenutzt werden kann, um das rückzuführenden Abgas aus dem AGR-Kanal in den Einlasskanal überströmen zu lassen. Wäre eine Mündung des AGR-Kanals dagegen auf der Krümmungsaußenseite angeordnet, könnte dies dagegen infolge eines dortigen lokal relativ großen Gasdrucks zu einer erschwerten Einleitung des rückzuführenden Gases in den Einlasskanal führen. Mittels der erfindungsgemäßen Ausgestaltung eines Verdichters wird ermöglicht, die AGR-Kanalmündung in vorteilhafter Weise auf der Krümmungsinnenseite des gekrümmten Verlaufs des Einlasskanals anzuordnen, während der AGR-Kanalabschnittseinlass auf der Krümmungsaußenseite positioniert ist, wo in vielen Fällen mehr Bauraum für einen Anschluss des AGR-Kanals an ein rückzuführendes Abgas zu diesem führendes Leitungssystem zur Verfügung steht.

Als "Krümmungsinnenseite" wird erfindungsgemäß diejenige Halbschale der Innenumfangsfläche des Einlasskanals verstanden, in der der kleinste Krümmungsradius mittig bezüglich der Umfangsrichtung angeordnet ist. Bei einem mehrfach gekrümmten Verlauf des Einlasskanals bezieht sich die Angabe der Anordnung der AGR-Kanalmündung auf der Krümmungsinnenseite auf diejenige einfache Krümmung, innerhalb der die AGR-Kanalmündung positioniert ist.

Als strömungstechnisch vorteilhaft kann sich bei einem erfindungsgemäßen Verdichter auswirken, wenn der Einlasskanal mit Ausnahme der AGR-Kanalmündung umfangsseitig geschlossen ausgebildet ist.

Ein erfindungsgemäßer Abgasturbolader umfasst neben einem erfindungsgemäßen Verdichter zumindest noch eine Turbine, die ein in einem Gehäuse drehbar gelagertes Turbinenlaufrad aufweist, wobei das Turbinenlaufrad drehantreibend, insbesondere über eine einfache Welle, mit dem Verdichterlaufrad verbunden ist.

Eine erfindungsgemäße Brennkraftmaschine umfasst zumindest
- einen Verbrennungsmotor (vorzugsweise Diesel- oder Ottomotor), einen Frischgasstrang, über den Frischgas einem oder mehreren Brennräumen des Verbrennungsmotors zuführbar ist,
- einen Abgasstrang, über den Abgas, das durch eine Verbrennung eines Gemisches aus den Brennräumen zugeführtem Kraftstoff und Frischgas entstanden ist, abführbar ist,
- einen in den Frischgasstrang integrierten erfindungsgemäßen Verdichter (gegebenenfalls als Teil eines erfindungsgemäßen Abgasturboladers), wobei der Verdichter in den Frischgasstrang (und eine gegebenenfalls vorhandene Turbine in den Abgasstrang) integriert ist, sowie
- eine Niederdruck-Abgasrückführung (ND-AGR), mittels der Abgas aus dem Abgasstrang (insbesondere stromab der Turbine (sofern vorhanden)) abgezweigt und in den Frischgasstrang stromauf des Verdichterlaufrads eingeleitet werden kann, wozu die Niederdruck-Abgasrückführung mit dem AGR-Kanal des Verdichters verbunden ist.

Die Erfindung betrifft weiterhin ein Kraftfahrzeug, insbesondere ein radbasiertes Kraftfahrzeug (vorzugsweise PKW oder LKW), mit einer erfindungsgemäßen Brennkraftmaschine. Dabei kann die Brennkraftmaschine insbesondere zur (direkten oder indirekten) Bereitstellung der Antriebsleistung für das Kraftfahrzeug vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:
- Fig. 1:: in schematischer Darstellung eine erfindungsgemäße Brennkraftmaschine;
- Fig. 2:: einen erfindungsgemäßen Verdichter;
- Fig. 3:: einen Querschnitt durch den Verdichter gemäß der Fig. 2; und
- Fig. 4:: eine körperliche Darstellung der von dem Verdichter gemäß den Fig. 2 und 3 ausgebildeten Strömungsräume.

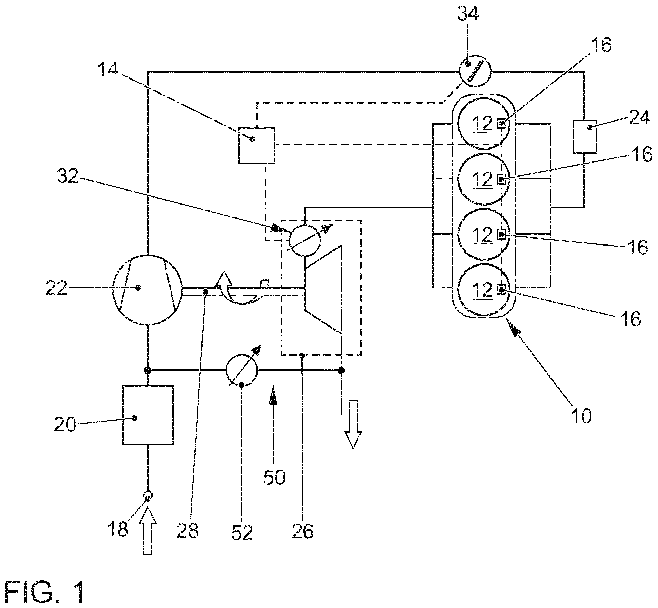

Die Fig. 1 zeigt in schematischer Darstellung eine erfindungsgemäße Brennkraftmaschine mit einem Verbrennungsmotor 10, der eine Mehrzahl von Zylindern 12 ausbildet. Die Zylinder 12 begrenzen gemeinsam mit darin auf und ab geführten Kolben und einem Zylinderkopf (nicht dargestellt) Brennräume, in denen Frischgas (Luft, zumindest zeitweise mit Abgas vermischt) gemeinsam mit Kraftstoff verbrannt wird. Der Kraftstoff wird dabei, gesteuert durch eine Steuerungsvorrichtung 14 (Motorsteuerung), mittels Injektoren 16 direkt in die Brennräume eingebracht. Das Verbrennen des Kraftstoff-Frischgas-Gemisches führt zu zyklischen Auf- und Ab-Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird.

Das Frischgas wird dem Verbrennungsmotor 10 über einen Frischgasstrang zugeführt und dazu über eine Ansaugmündung 18 aus der Umgebung angesaugt, in einem Luftfilter 20 gereinigt und anschließend in einen erfindungsgemäßen Verdichter 22, der Teil eines erfindungsgemäßen Abgasturboladers ist, geführt. Das Frischgas wird mittels des Verdichters 22 verdichtet, anschließend in einem Ladeluftkühler 24 abgekühlt und den Brennräumen zugeführt. Der Antrieb des Verdichters 22 erfolgt mittels einer Turbine 26 des Abgasturboladers, die in einen Abgasstrang der Brennkraftmaschine integriert ist. Abgas, das bei der Verbrennung des Kraftstoff-Frischgas-Gemisches in den Brennräumen des Verbrennungsmotors 10 entsteht, wird über den Abgasstrang aus dem Verbrennungsmotor 10 abgeführt und durchströmt dabei die Turbine 26. Dies führt in bekannter Weise zu einem rotierenden Antrieb eines Turbinenlaufrads (nicht dargestellt), das über eine Welle 28 drehfest mit einem Verdichterlaufrad 30 (in der Fig. 1 nicht dargestellt) des Verdichters 22 verbunden ist. Der rotierende Antrieb des Turbinenlaufrads wird somit auf das Verdichterlaufrad 30 übertragen.

Um im Betrieb des Verbrennungsmotors 10 mit unterschiedlicher Last und unterschiedlichen Drehzahlen eine möglichst optimale Nutzung der Enthalpie des Abgases zur Erzeugung von Verdichtungsleistung mittels des Abgasturboladers realisieren zu können, kann die Turbine 26 des Abgasturboladers optional (insbesondere bei einer Ausgestaltung des Verbrennungsmotors 10 als Dieselmotor) eine mittels der Steuerungsvorrichtung 14 ansteuerbare Vorrichtung zur variablen Turbinenanströmung (VTG) 32 aufweisen. Diese kann in bekannter Weise eine Mehrzahl von in einem Einlass der Turbine 26 angeordnete Leitschaufeln (nicht dargestellt) umfassen, die individuell drehbar ausgebildet sind, wobei diese gemeinsame mittels einer Verstellvorrichtung (nicht dargestellt) verstellbar sind. In Abhängigkeit von den Drehstellungen der Leitschaufeln verengen diese den freien Strömungsquerschnitt in dem Einlass der Turbine 26 mehr oder weniger und beeinflussen zudem den Abschnitt der primären Anströmung des Turbinenlaufrads und die Ausrichtung dieser Anströmung.

Stromab des Verdichters 22 ist in die Ladeluftstrecke, d.h. den Abschnitt des Frischgasstrangs zwischen dem Verdichter 22 und dem Verbrennungsmotor 10, eine ebenfalls mittels der Steuerungsvorrichtung 14 ansteuerbare Regelklappe 34 integriert. Bei einer Ausgestaltung des Verbrennungsmotors 10 als Ottomotor kann es sich bei dieser Regelklappe 34 um eine Drosselklappe (mit bekannter Funktionalität) handeln. Bei einer Ausgestaltung des Verbrennungsmotors 10 als Dieselmotor kann die primäre Funktion der Regelklappe 34 darin bestehen, kurzfristig nach einem Beenden des Betriebs des Dieselmotors die Ladeluftstrecke zu verschließen, wodurch ein Nachströmen von bereits verdichtetem Frischgas in die Brennräume des Dieselmotors und folglich ein sogenanntes "Abstellschütteln" vermieden werden kann. Dadurch soll ein ungewolltes Nachlaufen des Dieselmotors infolge von Selbstzündungen von Kraftstoffresten in den Brennräumen im Beisein von nachgeströmtem Frischgas verhindert werden. Sofern bei einer entsprechenden Brennkraftmaschine auch eine Hochdruck-Abgasrückführung (HD-AGR) vorhanden wäre, könnte die Regelklappe auch zur Beeinflussung und insbesondere Steigerung einer HD-AGR-Rate eingesetzt werden.

Die Brennkraftmaschine umfasst weiterhin eine Niederdruck-Abgasrückführung 50, über die stromab der Turbine 26 ein Teil des durch den Abgasstrang strömenden Abgases abgezweigt und, gesteuert durch einen AGR-Regelventil 52, stromauf des Verdichters 22 in den Frischgasstrang eingeleitet werden kann.

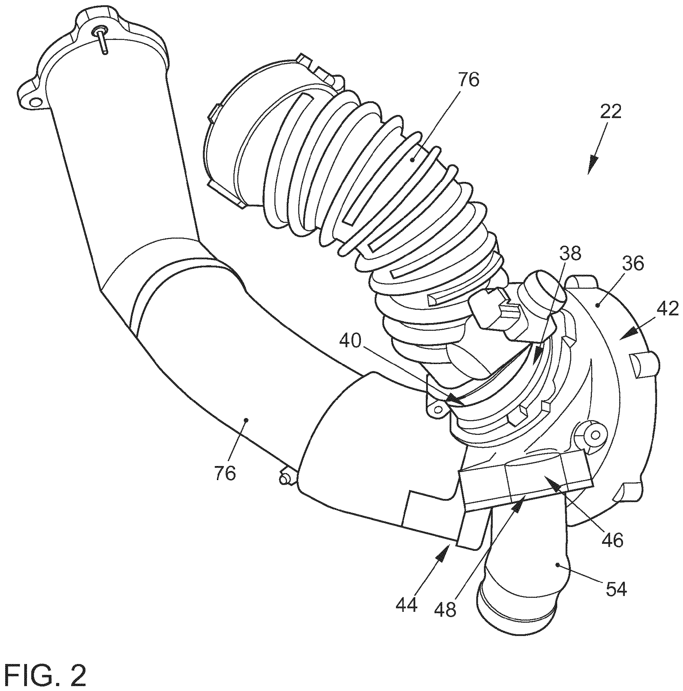

Die Fig. 2 bis 4 zeigen eine Ausgestaltungsform eines erfindungsgemäßen (Radial-)Verdichters 22, wie er beispielsweise als Teil des erfindungsgemäßen Abgasturboladers einer Brennkraftmaschine gemäß der Fig. 1 zum Einsatz kommen kann. In der Fig. 2 sind zudem Rohrleitungen 76 dargestellten, die mit einem Verdichtereinlass 40 und einem Verdichterauslass 44 des Verdichters 22 verbunden sind und Teil eines Frischgastrangs und Abgasstrangs einer Brennkraftmaschine gemäß der Fig. 1 darstellen können.

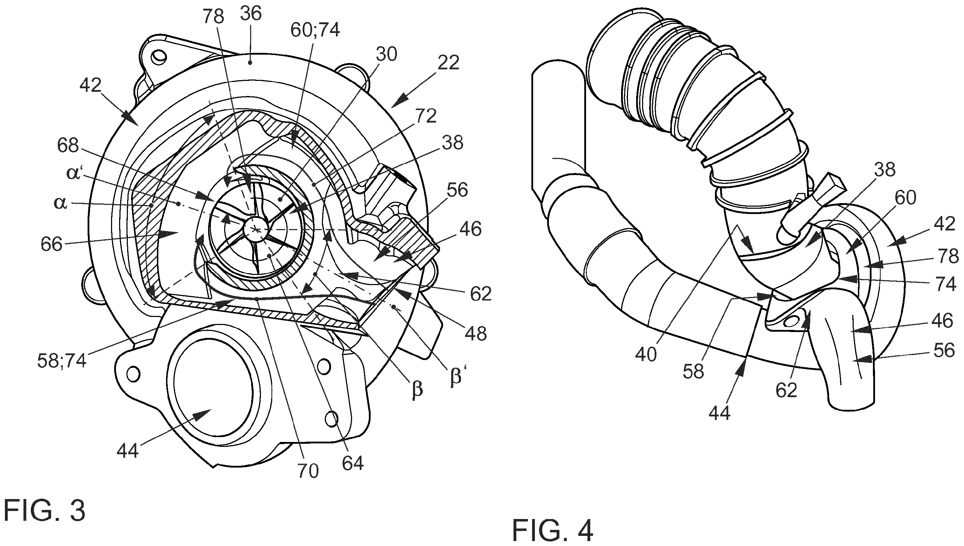

Der Verdichter 22 umfasst ein ein- oder mehrteiliges Gehäuse 36, das einen Strömungsraum 78 ausbildet, innerhalb dessen ein Verdichterlaufrad 30 drehbar gelagert ist (vgl. Fig. 3). Über einen von dem Gehäuse 36 des Verdichters 22 ausgebildeten Einlasskanal 38 kann Frischgas von dem Verdichtereinlass 40 zu dem Verdichterlaufrad 30 geführt werden. Auslassseitig schließt sich an den Strömungsraum 78 ein um das Verdichterlaufrad 30 umlaufender Diffusorraum (nicht sichtbar) und daran anschließend eine Verdichtervolute 42 an. Die Verdichtervolute 42 mündet in den Verdichterauslass 44.

Das Gehäuse 36 des Verdichters 22 bildet weiterhin einen AGR-Kanal 46 aus, der einen AGR-Einlass 48 umfasst, über den der AGR-Kanal 46 an eine Rohrleitung 54 einer Niederdruck-Abgasrückführung 50, beispielsweise der Niederdruck-Abgasrückführung 50 einer Brennkraftmaschine gemäß der Fig. 1, anschließbar ist. Ausgehend von dem AGR-Einlass 48 weist ein Anfangsabschnitt 56 des AGR-Kanals 46 zunächst einen gekrümmten Verlauf auf und ist dann in etwa radialer Richtung (bezogen auf den entsprechenden Abschnitt der Längsachse des Einlasskanals 38) auf den Einlasskanal 38 zuführend ausgerichtet. Am Ende des Anfangsabschnitts 56 setzt sich der AGR-Kanal 46 in einem AGR-Kanalabschnitt 74 fort, der von zwei Teilkanäle 58, 60 ausgebildet wird, die beide umfangsseitig geschlossen und bogenförmig um einen Abschnitt des Umfangs des Einlasskanals 38 beziehungsweise des den Einlasskanal 38 in dem entsprechenden Abschnitt begrenzenden Teils des Gehäuses 36 herum verlaufen. Der Strömungsquerschnitt des AGR-Kanals 46 in dem Übergang zwischen dem Anfangsabschnitt 56 und den beiden Teilkanälen 58, 60 stellt einen AGR-Kanalabschnittseinlass 62 des AGR-Kanals 46 dar. Die Krümmungsrichtungen der beiden Teilkanäle 58, 60 sind zueinander entgegengesetzt gerichtet, wobei die Krümmungsrichtung eines ersten Teilkanals 58 einer vorgesehenen Drehrichtung 64 des Verdichterlaufrads 30 entspricht, während die Krümmungsrichtung des zweiten Teilkanals 60 dieser vorgesehenen Drehrichtung 64 entgegengesetzt ist. Die beiden Teilkanäle 58, 60 münden in einen Sammelabschnitt 66 des AGR-Kanals 46 (vgl. Fig. 3). Innerhalb dieses Sammelabschnitts 66 bildet die den Einlasskanal 38 begrenzende Wandung des Gehäuses 36 eine Mündungsöffnung aus, die als AGR-Kanalmündung 68 dient und über die rückzuführendes Abgas in den Einlasskanal 38 überströmen kann. Die AGR-Kanalmündung 68 erstreckt sich über einen Winkel α von ca. 105° und damit über weniger als ein Drittel des dortigen Umfangs des Einlasskanals 38. Die Umfangsmitte α' der AGR-Kanalmündung 68 ist zudem um etwas weniger als 180° (bezüglich des entsprechenden Abschnitts der Längsachse des Einlasskanals 38) zu der Umfangsmitte β' des AGR-Kanalabschnittseinlasses 62 versetzt angeordnet.

Infolge des bogenförmigen Verlaufs der beiden Teilkanäle 58, 60 des AGR-Kanals 46 wird den zwei über diese Teilkanäle 58, 60 geführten Strömungen 70, 72 rückzuführenden Abgases ein Drall (um den entsprechenden Abschnitt der Längsachse des Einlasskanals 38) aufgezwungen, wobei die Drallrichtung der über den ersten Teilkanal 58 geführten Strömung 70 der vorgesehenen Drehrichtung 64 des Verdichterlaufrads 30 entspricht, während die Drallrichtung der über den zweiten Teilkanal 60 geführten Strömung 72 dieser vorgesehenen Drehrichtung 64 entgegengesetzt ist. Da jedoch der kleinste Strömungsquerschnitt des ersten Teilkanals 58 größer als der kleinste Strömungsquerschnitt des zweiten Teilkanals 60 ist, ist auch derjenige Anteil des insgesamt über den AGR-Kanal 46 strömenden Abgases, der über den ersten Teilkanal 58 bis zu den Sammelabschnitt 66 geführt wird, d.h. der Volumenstrom der Strömung 70, größer als der andere, über den zweiten Teilkanal 60 geführte Anteil, d.h. der Volumenstrom der Strömung 72. Dies führt dazu, dass die Gesamtströmung des rückzuführenden Abgases, die über die AGR-Kanalmündung 68 in den Einlasskanal 38 überströmt, einen Drall aufweist, dessen Drallrichtung der vorgesehenen Drehrichtung 64 des Verdichterlaufrads 30 entspricht. Dieser Drall des in den Einlasskanal 38 rückgeführten Abgases kann sich auf innerhalb des Einlasskanals 38 in Richtung des Verdichterlaufrads 30 strömendes Frischgas übertragen und kann so ein vorteilhaftes Betriebsverhalten des Verdichters 22 unterstützen.

Der Einlasskanal 38 weist ausgehend von dem Verdichtereinlass 40 bis hin zu der Mündung in den das Verdichterlaufrad 30 aufnehmenden Strömungsraum 78 einen gekrümmten Verlauf auf. Die AGR-Kanalmündung 68 ist dabei auf der Krümmungsinnenseite dieses gekrümmten Verlaufs angeordnet, wodurch ein dortiger relativer Unterdruck in dem durch den Einlasskanal 38 geführten Frischgas, der sich infolge der gekrümmten Strömungsführung einstellt, ausgenutzt werden kann, um ein Überströmen des rückzuführenden Abgases aus dem AGR-Kanal 46 in den Einlasskanal 38 zu unterstützen.

Mit Ausnahme der AGR-Kanalmündung 68 ist der Einlasskanal 38 des Verdichters 22 umfangsseitig geschlossen ausgebildet.

### Bezugszeichenliste

- 10: Verbrennungsmotor
- 12: Zylinder
- 14: Steuerungsvorrichtung
- 16: Injektor
- 18: Ansaugmündung
- 20: Luftfilter
- 22: Verdichter
- 24: Ladeluftkühler
- 26: Turbine
- 28: Welle
- 30: Verdichterlaufrad
- 32: Vorrichtung zur variablen Turbinenanströmung
- 34: Regelklappe
- 36: Gehäuse des Verdichters
- 38: Einlasskanal des Verdichters
- 40: Verdichtereinlass
- 42: Verdichtervolute
- 44: Verdichterauslass
- 46: AGR-Kanal
- 48: AGR-Einlass
- 50: Niederdruck-Abgasrückführung
- 52: AGR-Regelventil
- 54: Rohrleitung einer Niederdruck-Abgasrückführung
- 56: Anfangsabschnitt des AGR-Kanals
- 58: erster Teilkanal des AGR-Kanals
- 60: zweiter Teilkanal des AGR-Kanals
- 62: AGR-Kanalabschnittseinlass
- 64: vorgesehene Drehrichtung des Verdichterlaufrads
- 66: Sammelabschnitt des AGR-Kanals
- 68: AGR-Kanalmündung
- 70: Strömung von über den ersten Teilkanal rückzuführendem Abgas
- 72: Strömung von über den zweiten Teilkanal rückzuführendem Abgas
- 74: AGR-Kanalabschnitt
- 76: Rohrleitung
- 78: Strömungsraum

- α:: Umfangsbreite der AGR-Kanalmündung
- α':: Umfangsmitte der AGR-Kanalmündung
- β:: Umfangsbreite des AGR-Kanalabschnittseinlasses
- β':: Umfangsmitte des AGR- Kanaleinlasses

## Patentansprüche

1. Verdichter (22) mit einem Gehäuse (36), das einen Strömungsraum (78), innerhalb dessen ein Verdichterlaufrad (30) drehbar gelagert ist, und einen Einlasskanal (38), der sich zwischen einem Verdichtereinlass (40) und dem Strömungsraum (78) erstreckt, ausbildet, wobei in den Einlasskanal (38) ein AGR-Kanal (46) für eine Abgasrückführung mündet, wobei der AGR-Kanal (46) in einem umfangsseitig geschlossen ausgebildeten AGR-Kanalabschnitt (74) bogenförmig um zumindest einen Abschnitt des Umfangs des Einlasskanals (38) herum verläuft, so dass ein AGR-Kanalabschnittseinlass (62) in Umfangsrichtung des Einlasskanals (38) zu der AGR-Kanalmündung (68) versetzt angeordnet ist und wobei der AGR-Kanal (46) derart ausgebildet ist, dass über den AGR-Kanal (46) in den Einlasskanal (38) eintretendes Abgas einen Drall in der für das Verdichterlaufrad (30) vorgesehenen Drehrichtung (64) aufweist, **dadurch gekennzeichnet, dass** der AGR-Kanalabschnitt (74) zwei Teilkanäle (58, 60) umfasst, die ausgehend von dem AGR-Kanalabschnittseinlass (62) in entgegengesetzten Umfangsrichtungen um zumindest einen Abschnitt des Umfangs des Einlasskanals (38) herum verlaufen, wobei der kleinste Strömungsquerschnitt desjenigen Teilkanals (58), dessen Krümmungsrichtung der für das Verdichterlaufrad (30) vorgesehenen Drehrichtung (64) entspricht, größer als der kleinste Strömungsquerschnitt des anderen Teilkanals (60) ist.

2. Verdichter (22) gemäß Anspruch 1, **dadurch gekennzeichnet, dass** der AGR-Kanalabschnitt (74) um mindestens 90°, 120° oder 150° des Umfangs des Einlasskanals (38) herum verläuft.

3. Verdichter (22) gemäß einem der vorhergehenden Ansprüche, **dadurch gekennzeichnet, dass** der Einlasskanal (38) einen gekrümmten Verlauf aufweist und die AGR-Kanalmündung (68) auf der Krümmungsinnenseite angeordnet ist.

4. Verdichter (22) gemäß einem der vorhergehenden Ansprüche, **dadurch gekennzeichnet, dass** der Einlasskanal (38) mit Ausnahme der AGR-Kanalmündung (68) umfangsseitig geschlossen ausgebildet ist.

5. Abgasturbolader mit einem Verdichter (22) gemäß einem der vorhergehenden Ansprüche und einer Turbine (26), die ein in einem Gehäuse drehbar gelagertes Turbinenlaufrad aufweist, wobei das Turbinenlaufrad drehantreibend mit dem Verdichterlaufrad (30) verbunden ist.

6. Brennkraftmaschine mit einem Verbrennungsmotor (10), einem Frischgasstrang, einem Abgasstrang, einer Niederdruck-Abgasrückführung und einem in den Frischgasstrang integrierten Verdichter (22) gemäß einem der Ansprüche 1 bis 4 oder einem Abgasturbolader gemäß Anspruch 5, wobei der Verdichter (22) in den Frischgasstrang integriert ist.

## Claims

1. Compressor (22) having a housing (36) which forms a flow chamber (78), within which a compressor impeller (30) is rotatably mounted, and an inlet channel (38), which extends between a compressor inlet (40) and the flow chamber (78), wherein an EGR channel (46) for exhaust-gas recirculation opens into the inlet channel (38), wherein the EGR channel (46), in an EGR channel portion (74) of circumferentially closed form, runs in arcuate fashion around at least one portion of the circumference of the inlet channel (38), such that an EGR channel portion inlet (62) is arranged offset relative to the EGR channel mouth (68) in the circumferential direction of the inlet channel (38), and wherein the EGR channel (46) is formed such that exhaust gas entering the inlet channel (38) via the EGR channel (46) exhibits swirl in the direction of rotation (64) intended for the compressor impeller (30), **characterized in that** the EGR channel portion (74) comprises two partial channels (58, 60) which, proceeding from the EGR channel portion inlet (62), run in opposite circumferential directions around at least one portion of the circumference of the inlet channel (38), wherein the smallest flow cross section of that partial channel (58) whose curvature direction corresponds to the direction of rotation (64) intended for the compressor impeller (30) is larger than the smallest flow cross section of the other partial channel (60).

2. Compressor (22) according to Claim 1, **characterized in that** the EGR channel portion (74) runs around at least 90°, 120° or 150° of the circumference of the inlet channel (38).

3. Compressor (22) according to any of the preceding claims, **characterized in that** the inlet channel (38) has a curved profile, and the EGR channel mouth (68) is arranged on the inner side of the curve.

4. Compressor (22) according to any of the preceding claims, **characterized in that** the inlet channel (38) is formed so as to be circumferentially closed with the exception of the EGR channel mouth (68) .

5. Exhaust-gas turbocharger having a compressor (22) according to any of the preceding claims and having a turbine (26) which has a turbine impeller mounted rotatably in a housing, wherein the turbine impeller is connected with rotational driving action to the compressor impeller (30).

6. Combustion machine having an internal combustion engine (10), a fresh-gas tract, an exhaust-gas tract, a low-pressure exhaust gas recirculation arrangement and a compressor (22) according to any of Claims 1 to 4 integrated into the fresh-gas tract, or an exhaust-gas turbocharger according to Claim 5, wherein the compressor (22) is integrated into the fresh-gas tract.

## Revendications

1. Compresseur (22) comprenant un carter (36) qui forme un espace d'écoulement (78), à l'intérieur duquel un rotor de compresseur (30) est monté à rotation, et un conduit d'admission (38) qui s'étend entre une entrée de compresseur (40) et l'espace d'écoulement (78), un conduit EGR (46) destiné la recirculation des gaz d'échappement s'ouvrant dans le conduit d'admission (38), le conduit EGR (46) s'étendant en arc de cercle autour d'au moins une partie de la périphérie du conduit d'admission (38) dans une partie de conduit EGR (74) conçue pour être fermée périphériquement de sorte qu'une entrée de partie de conduit EGR (62) soit disposée de manière décalée par rapport à l'embouchure de conduit EGR (68) dans la direction périphérique du conduit d'admission (38) et le conduit EGR (46) étant conçu de sorte que gaz d'échappement entrant dans le conduit d'admission (38) par le conduit EGR (46) comporte une torsion dans le sens de rotation (64) prévu pour le rotor de compresseur (30), **caractérisé en ce que** la partie de conduit EGR (74) comprend deux sous-conduits (58, 60) qui s'étendent depuis l'entrée de partie de conduit EGR (62) dans des directions périphériques opposées autour d'au moins une partie de la périphérie du conduit d'admission (38), la plus petite section d'écoulement du sous-conduit (58), dont le sens de courbure correspond au sens de rotation (64) prévu pour le rotor de compresseur (30), étant supérieure à la plus petite section d'écoulement de l'autre sous-conduit (60).

2. Compresseur (22) selon la revendication 1, **caractérisé en ce que** la partie de conduit EGR (74) s'étend sur au moins 90°, 120° ou 150° de la périphérie du conduit d'admission (38).

3. Compresseur (22) selon l'une des revendications précédentes, **caractérisé en ce que** le conduit d'admission (38) a une allure incurvée et **en ce que** l'embouchure de conduit EGR (68) est disposée du côté intérieur de l'incurvation.

4. Compresseur (22) selon l'une des revendications précédentes, **caractérisé en ce que** le conduit d'admission (38) est conçu pour être fermé périphériquement à l'exception de l'embouchure de conduit EGR (68).

5. Turbocompresseur à gaz d'échappement pourvu d'un compresseur (22) selon l'une des revendications précédentes et d'une turbine (26) qui comporte un rotor de turbine monté à rotation dans un boîtier, le rotor de turbine étant relié solidairement en rotation au rotor de compresseur (30).

6. Machine à combustion interne comportant un moteur à combustion interne (10), une conduite de gaz frais, une conduite de gaz d'échappement, une recirculation de gaz d'échappement à basse pression et un compresseur (22) selon l'une des revendications 1 à 4, ou un turbocompresseur à gaz d'échappement selon la revendication 5, intégré dans la conduite de gaz frais, le compresseur (22) étant intégré dans la conduite de gaz frais.
